# EUROPÄISCHE PATENTSCHRIFT

(11) **EP 1 180 204 B1**
(45) Veröffentlichungstag und Bekanntmachung des Hinweises auf die Patenterteilung: **16.03.2005**
(21) Anmeldenummer: 00938547.7
(22) Anmeldetag: 12.05.2000
(51) Int. Cl.: F01N 3/28

(54) **WABENKÖRPER**
HONEYCOMB ELEMENT
CORPS ALVEOLAIRE

(30) Priorität: 14.05.1999 DE 19922357; 14.05.1999 DE 19922356
(43) Veröffentlichungstag der Anmeldung: 20.02.2002
(73) Patentinhaber: Swars, Helmut, 51429 Bergisch Gladbach (DE)
(72) Erfinder: Swars, Helmut, 51429 Bergisch Gladbach (DE)
(74) Vertreter: Lippert, Stachow, & Partner
(86) Internationale Anmeldenummer: PCT/DE2000/001490
(87) Internationale Veröffentlichungsnummer: WO 2000/070206

(56) Entgegenhaltungen:
- DE-U- 29 723 721
- GB-A- 2 174 615
- US-A- 5 593 645
- PATENT ABSTRACTS OF JAPAN vol. 1996, no. 02, 29. Februar 1996 (1996-02-29) & JP 07 279652 A (NIPPONDENSO CO LTD;OTHERS: 01), 27. Oktober 1995 (1995-10-27)
- PATENT ABSTRACTS OF JAPAN vol. 012, no. 286 (M-727), 5. August 1988 (1988-08-05) & JP 63 063521 A (KAWASAKI STEEL CORP), 19. März 1988 (1988-03-19)

## Beschreibung

Die Erfindung betrifft einen Wabenkörper, insbesondere Katalysatorträger, mit einer Vielzahl von übereinander gestapelt angeordneten Blechlagen zwischen denen von einem Fluid durchströmbare Kanäle ausgebildet sind, und mit stirnseitigen Ein- bzw. Ausströmöffnungen, wobei zumindest im Bereich einer stirnseite des Wabenkörpers Mittel zur Strömungsumlenkung des in die Kanäle einströmenden Fluids vorgesehen sind.

Die übereinander angeordneten Blechlagen können wellenförmig profiliert sein, wobei der Wabenkörper aus profilierten Blechlagen oder alternierend angeordneten profilierten und ebenen Blechlagen bestehen kann. Benachbarte Blechlagen können eine inverse Profilierung aufweisen, d.h. mit ihren Wellenbergen einander zugewandt angeordnet sein, der Wabenkörper kann auch aus Blechlagen unterschiedlicher Profilierung aufgebaut sein, die beispielsweise alternierend angeordnet sind.

Derartige Wabenkörper werden beispielsweise als Katalysatoren in Kraft-fahrzeugen eingesetzt, ohne daß die Anwendungsmöglichkeiten hierauf beschränkt sind.

Zur Erhöhung der Wirksamkeit des Katalysators ist es bekannt, die den Wabenkörper durchziehenden Strömungskanäle mit Durchbrechungen zu versehen, um so eine bessere Durchmischung des den Wabenköper durchströmenden fluiden Mediums zu erreichen. Die hierdurch erzielten Verbesserungen des Wirkungsgrades des Katalysators sind jedoch nur begrenzt.

Die JP-A-07279652 offenbart einen gattungsgemäßen Wabenkörper, bei welchem zur Strömungsumlenkung des in den Wabenkörper eintretenden Fluids in einem Abstand L von der Stirnfläche des Wabenkörpers eine Strömungsumlenkeinrichtung mit zueinander schräg gestellten Strömungsumlenkflächen, die einen Winkel γ einschliessen, angeordnet ist.

Die US 5,593,645 beschreibt einen Katalysator mit einem Katalysatorträger bestehend aus zwei einander gegenüber angeordneten Wabenkörpern, zwischen denen eine keilförmig ausgebildete Strömungsumlenkeinrichtung angeordnet ist, wobei jeder Stirnseite der Wabenkörper jeweils eine zur Stirnseite schräg gestellte Seitenfläche zugewandt ist. Die keilförmige Strömungsumlenkeinrichtung ist mit ihrer Basis an einer Halterungsplatte befestigt, an der zugleich die Wabenkörper angeschweißt sind.

Der Erfindung liegt die Aufgabe zugrunde, einen Wabenkörper zu schaffen, der insbesondere bei Verwendung als Katalysatorträger eine erhöhte Wirksamkeit aufweist und nur geringe Druckverluste des durchströmenden Mediums bedingt

Die Aufgabe wird durch einen Wabenkörper mit den Merkmalen des Anspruchs 1 gelöst. Es wurde festgestellt, daß durch die Anordnung der Mittel zur Strömungsumlenkung im Stirnbereich des Wabenkörpes die Wirksamkeit eines als Katalysator verwendeten Wabenkörpers um ein Mehrfaches gegenüber der Anordnung von Strömungsumlenkungsmitteln im Inneren des Wabenkörpers erhöht werden kann. Im Einströmbereich des Wabenkörpers liegt zumeist noch eine turbulente Strömung vor, so daß die Mittel zur Strömungsumlenkung besonders wirksam sind, ohne dass hierbei erhöhte Drckverluste auftreten.

Die Mittel zur Strömungsumlenkung verlaufen vorzugsweise im wesentlichen senkrecht zu den Strömungspfaden des fluiden Mediums, sie können sich beispielsweise über die gesamte Breite des Wabenkörpers oder nur uber einen Teilbereich derselben erstrecken, z.B. nur über die Breite oder einen Teil der Breite eines Strömungskanals. Ein Stromungskanal kann z.B. durch eine geeignete Profilierung oder Stapelung der Blechlagen ausgebildet werden. Die Stromungskanäle können derart ausgeführt sein, daß ein Medienaustausch zwischen benachbarten Kanälen nicht oder nur in untergeordnetem Umfang stattfindet, wobei sich dieser Bereich auf den Einströmbereich des Wabenkörpers, z.B. eine Tiefe von einer oder bis zu 5 oder 10 oder mehr Blechlagenabständen beschranken kann oder sich über einen größeren Bereich des Wabenkorpers, vorzugsweise beginnend vom Einströmbereich, erstrecken kann. Die erfindungsgemäßen Mittel zur Strömungsumlenkung können jedoch auch verwendet werden, wenn die Breite eines Strömungskanals im wesentlichen der Breite des Wabenkörpers entspricht, so daß die Kanäle seitlich durch die vorzugsweise fluiddichte Aussenwand des Wabenkörpers begrenzt werden.

Die Mittel zur Strömungsumlenkung bzw. Bereiche derselben sind vorzugsweise jeweils einzelnen Strömungskanälen oder Strömungspfaden des Wabenkörpers zugeordnet, was gegebenenfalls auch gruppenweise erfolgen kann. Insbesondere können die Strömungsumlenkmittel beabstandet von dem seitlichen Rand des Wabenkörpers, z.B. im Abstand einiger wie z.B. 1-5 Blechlagenabständen vorgesehen siein.

Die Mittel zur Strömungsumlenkung können mit einem Winkel von 45 ° oder weniger, vorzugsweise 30 ° oder weniger, zur Wabenkörperlängsrichtung oder Anströmrichtung gestellt sein, um Druckverluste zu minimieren. Die Mittel zur Strömungsumlenkung können als abgefaltete Bereiche der Blechlagen oder als zusätzlich zu den Blechlagen vorgesehene Mittel ausgeführt sein. Die Strömungsumlenkmittel nehmen somit in Strömungsrichtung des fluiden Mediums vorzugsweise nur einen vergleichsweise geringen Querschnittsbereich ein, z.B. weniger als 25%, vorzugsweise weniger als 10% des Gesamtquerschnitts des Wabenkörpers in der jeweiligen Strömungsrichtung, so daß der Druckverlust durch die Strömungsumlenkmittel verglichen mit dem Gesamtdruckverlust des Wabenkörpers klein oder vernachlässigbar sein kann.

Vorzugsweise stehen die Mittel zur Strömungsumlenkung von einer oder beiden Stirnseiten des Wabenkörpers nach außen vor, sie können auch im Einströmbereich des Wabenkörpers angeordnet sein. Der Einströmbereich ist hierbei ein Bereich, bei welchem aufgrund der sich verändernden Strömungsverhältnisse beim Eintritt des fluiden Mediums in den Wabenkörper noch eine turbulente Strömung vorliegt. Die Mittel zur Strömungsumlenkung sind hierbei vorzugsweise in einem Bereich vorgesehen, der sich von der Stirnseite des Wabenkörpers über eine Tiefe in diesen erstreckt, die bis zu der drei- bis fünffachen, vorzugsweise bis zu der einfachen, Höhe der Kanäle des Wabenkörpers bzw. des Abstandes der den Wabenkörper aufbauenden Blechlagen entspricht.

Die Mittel zur Strömungsumlenkung sind vorzugsweise mit den Blechlagen verbunden, wobei die Verbindung lösbar oder unlösbar erfolgen kann, oder sie stellen Teile der Blechlagen selber dar, beispielsweise zur Blechlagenhauptebene umgeformte Bereiche der Blechlagen. Die Mittel zur Strömungsumlenkung können im einfachsten Falle auch sich quer zur Wabenkörperlängsachse erstreckende langgestreckte Profilelemente wie Drähte, Bänder oder Stege sein.

Die Strömungsumlenkmittel können die Strömungskanäle des Wabenkörpers ganz oder teilweise überbrücken, so daß die Strömungsumlenkmittel in die Kanalquerschnitte hineinragen. Hierzu können die Strömungsumlenkmittel sich z.B. durchgehend über die ganze Breite des Wabenkörpers erstrecken. Die Erstreckung der Profilelemente in Wabenkörperlängsrichtung ist vorzugsweise klein zur Wabenkörperlänge, z.B. kleiner als der 1-3 fache mittlere Blechlagenabstand oder im Bereich der einfachen bis 10fachen Blechlagenstärke.

Die erfindungsgemäßen Mittel zur Strömungsumlenkung können eine zusätzliche Verwirbelung des in den Wabenkörper einströmenden Fluids bewirken, insbesondere bei im wesentlichen langgestreckten Profilelementen, sie können auch alternativ oder zusätzlich im wesentlichen eine Änderung der Strömungsrichtung des fluiden Mediums bewirken und hierbei in Art von Leitblechen fungieren. Erfolgt beispielsweise eine schräge Anströmung des Wabenkörpers durch das fluide Medium in bezug auf die Wabenkörperlängsachse, so können die Mittel zur Strömungsumlenkung in Richtung auf die Anströmrichtung hin angestellte Leitbleche sein, so daß Stauwirbel im Eintrittsbereich des Mediums in den Wabenkörper und damit entsprechende Druckverluste verhindert werden können.

Die Mittel zur Strömungsumlenkung können in Form von vor- und zurückspringenden Bereichen der den Wabenkörper aufbauenden Blechlagen vorgesehen sein wobei die Blechlagen auf Höhe der vor- und zurückspringenden Bereiche mit sich in Wabenkörperlängsrichtung erstreckenden Erhebungen oder Vertiefungen versehen sein können oder im wesentlichen eben ausgeführt sein können. Die gewellten oder ebenen Blechlagen können derart gestapelt sein, daß bei benachbarten Blechlagen vor- und zurückspringende Bereiche in einer Richtung senkrecht zu den Blechlagen übereinander angeordnet sind, wodurch bei schräger Anströmung des Wabenkörpers in Anströmrichtung eine vergrößerte Anströmfläche für das Fluid bereitgestellt wird. Es können auch jeweils zurückspringende Bereiche benachbarter Blechlagen in Stapelrichtung der Blechlagen übereinander angeordnet werden, wodurch die Stirnfläche des Eintrittsbereichs des fluiden Mediums in den Wabenkörper V-förmig ausgeführt ist, so daß das fluide Medium ohne erhöhten Druckverlust aufgrund von Stauwirbeln aus verschiedenen Richtungen schräg zur Wabenkörperlängsachse in diesen einströmen kann.

Der Wabenkörper kann durch Stapelung einzelner separater Blechlagen aufgebaut werden. Vorteilhafterweise wird der Wabenkörper durch ein zick-zack-förmig gefaltetes Band aufgebaut, wobei die einzelnen Blechlagen durch zur Längserstreckung des Bandes verlaufende Faltungslinien begrenzt werden. Ist das Band mit einer Längswellung versehen, um gewellte Blechlagen zur Verfügung zu stellen, so sind auf oder benachbart der Faltungslinie die Wellentäler bzw. Erhebungen mit Einschnitten versehen, die eine Umfaltung des Bandes um ca. 180 ° ermöglichen, wobei die durch die Umfaltung entstehenden benachbarten Blechlagen miteinander durch an dem Band verbleibende Stege verbunden sind. Die Mittel zur Strömungsumlenkung können hierbei durch geeignete Ausbildung der Einschnitte oder durch Strukturierung der Blechlagen auf Höhe der Faltungslinie ausgebildet werden. Die Einschnitte können im wesentlichen linear, z.B. V- oder U-förmig oder auf geeignete Weise erfolgen, die Einschnitte können auch in Form von Ausstanzungen erfolgen, wobei die ausgestanzten Flächen die Form von Parallelogrammen, insbesondere Rauten, aufweisen können, die Ausstanzungen können auch derart erfolgen, daß die verbleibenden Verbindungsstege zwischen benachbarten Blechlagen eine Länge aufweisen, die ein Vielfaches der Blechlagenstärke oder bis zum Blechlagenabstand oder mehr betragen, so daß nach Umfaltung stirnseitig nach außen vorstehende Vorsprünge verbleiben.

Die Einschnitte im Bereich der Faltungslinie können jeweils auch beabstandet von der Faltungslinie vorgesehen sein, so daß auf Höhe der Faltungslinie ein sich über die gesamte Breite des Wabenkörpers erstreckender und stirnseitig vorstehender Steg resultiert.

In die die Blechlagen verbindenden Stege kann ein sich über ein oder mehrere Kanäle, vorzugsweise über die gesamte Breite des Wabenkörpers erstreckendes Profilelement wie ein Draht oder ein Band eingelegt und gegebenenfalls an dem Steg kraftoder formschlüssig befestigt werden. Die stirnseitig nach außen vorstehenden Stege können parallel zu den Blechlagen verlaufen oder zu diesen abgewinkelt sein, vorzugsweise in Richtung auf die Anströmrichtung des Fluids, die durch einen geneigt zur Längsachse des Wabenkörpers angeordneten Strömungskanal des Gehäuses definiert sein kann.

Nach einer weiteren Ausführungsform können die Blechlagen beabstandet von den Stirnseiten in einer Richtung senkrecht zur Haupterstreckungsebene der Blechlagen abgefaltet sein. Sind die Blechlagen profiliert, z.B. wellenförmig profiliert, so können, um die Abfaltung der Blechlagenabschnitte zu erleichtern, die Scheitel bzw. Täler der Blechlagenwellungen mit Einschnitten versehen sein, wobei Verbindungsstege zu den Blechlagen verbleiben. Die Länge der Abfaltungen kann entlang der Höhe des Wabenkörpers zu- oder abnehmen, so daß die nach Abfaltung der Blechlagenabschnitte entstehende Einströmfläche in den Wabenkörper geneigt zur Längsachse des Wabenkörpers verläuft. Die Abwinkelung kann z.B. derart erfolgen, daß bei schräger Anströmung des Wabenkörpers durch ein Fluid die Einströmfläche im wesentlichen senkrecht zur Anströmrichtung gestellt ist oder im wesentlichen der Winkelhalbierenden zwischen der Anströmrichtung und der Längsrichtung des Wabenkörpers entspricht.

Weist der Wabenkörper gewellte Blechlagen auf, so können die Wellungen abgeflachte, zur Wabenkörperlängsachse geneigt verlaufende Abschnitte aufweisen, die stirnseitig enden. Sind die Abflachungen im wesentlichen eben, so resultieren im wesentlichen dreieckige Strömungsumlenkmittel, wobei die Basis der Dreiecke entlang der Stirnseite des Wabenkörpers verläuft. Die Abflachungen können gegebenenfalls auch eine sich in Wabenkörperlängsrichtung erstreckende Krümmung aufweisen.

Die den Wabenkörper aufbauenden Blechlagen können im Bereich der Wellentäler oder Wellenrücken stirnseitig endende, im wesentlichen in Längsrichtung des Wabenkörpers verlaufende Schlitze aufweisen, wobei die an die Schlitze seitlich angrenzenden Bereiche der Blechlagen in Richtung auf die benachbarte Blechlage abgebogen bzw. abgewinkelt sind. Hierdurch werden die Einströmquerschnitte in die durch die Wellungen definierten Strömungskanäle vergrößert. Diese Ausführungsform ist insbesondere bei schräger Anströmung des Wabenkörpers vorteilhaft, da durch die Aufbiegung der an die Schlitze angrenzenden Blechlagenbereiche Stauwirbel auf der der Anströmrichtung abgewandten Seite der Blechlagen vermieden werden. Die Schlitze sind somit bei gegebener schräger Anströmrichtung auf der der Anströmrichtung zugewandten Seite der Kanäle vorgesehen. Vorzugsweise werden beide an die Schlitze angrenzenden Blechlagenbereiche abgebogen. Vorteilhafterweise stützen sich die abgebogenen Blechlagenbereiche auf der benachbarten Blechlage ab, wobei die Abstützung vorzugsweise auf abgeflachten Bereichen der Blechlagenwellungen erfolgt.

Die Mittel zur Strömungsumlenkung können auch als stirnseitig von dem Wabenkörper vorstehende, separate Einsatzstücke ausgebildet sein, die in die Kanäle des Wabenkörpers eingreifen bzw. an den Blechlagen festgelegt sind. Die separaten Einsatzstücke sind unabhängig von den Blechlagen profilierbar und können hierdurch an unterschiedlichste Erfordernisse angepaßt sein. Die Einsatzstücke, wie auch anders ausgebildete erfindungsgemäße Strömungsumlenkmittel, können zugleich die Blechlagen im Einströmbereich des Wabenkörpers stabilisieren. Die Einsatzstücke können hierzu in einer geeigneten Materialstärke ausgebildet sein und flächig auf den Blechlagen aufliegen. Die Einsatzstücke können gegebenenfalls auch einstückig an den den Wabenkörper aufbauenden Blechlagen angeformt sein, z.B. in Form von profilierten Blechlagenabfaltungen, wobei die einzelnen Blechlagen durch die Einsatzstücke aneinander befestigt werden können. Besteht der Wabenkörper aus einem zick-zack-förmig gefalteten Band, so können die Einsatzstücke übereinanderliegende Blechlagen verbinden, die nicht durch in dem Band integrierte Verbindungsstege verbunden sind.

Die Mittel zur Strömungsumlenkung sind vorzugsweise an dem Wabenkörper befestigt bzw. an Teilen des Wabenkörpers angeformt, sie können auch als separate Bauteile ausgeführt und unmittelbar vor der Stirnseite des Wabenkörpers angeordnet sein, vorzugsweise unter stirnseitiger Anlage an dem Wabenkörper oder in einem geringem Abstand, z.B. im Bereich eines Blechlagenabstandes oder weniger, ohne hierauf beschränkt zu sein. Die Vorsatzstücke können hierzu an dem Gehäuse festgelegt sein. Die Ausführung des vorgesetzten Strömungsumlenkmittel kann ansonsten derjenigen der an dem Wabenkörper festgelegten Strömungsumlenkmittel entsprechen.

Vorteilhafterweise weist der Wäbenkörper zusätzlich zu den einfachen Blechlagen Versteifungselemente auf, die sich im wesentlichen parallel zu den Blechlagen und vorzugsweise im wesentlichen senkrecht zur Längserstreckung des Wabenkörpers bzw. der Strömungsrichtung des durch diesen geführten Fluids erstrecken. Die Versteifungselemente können als zusätzliche Drähte, Bänder oder Streckmetallagen ausgeführt sein. Die Versteifungselemente können auch als Faltungen der Blechlagen ausgeführt sein, so daß Lagendoppelungen oder Mehrfachlagen entstehen. Die Erstreckung der Versteifungselemente in Längsrichtung des Wabenkörpers ist vorzugsweise klein gegen die Länge des Wabenkörpers, z.B. weniger als 10% oder 5% dessen Länge, sie kann auch im Bereich des Blechlagenabstandes oder darunter liegen, z.B. im Bereich der Blechlagenstärke.

Des weiteren können alternativ oder zusätzlich Versteifungselemente vorgesehen sein, die sich quer zu den Blechlagen erstrecken und mehrere Blechlagen miteinander verbinden. Die Versteifungselemente verlaufen somit schräg bzw. senkrecht zu den Blechlagen. Die Versteifungselemente können als Drähte oder Bänder und insbesondere als miteinander verbundene Blechlagenfaltungen, die von den Blechlagen z.B. in Richtung auf eine benachbarte Blechlage abgewinkelt sind, ausgeführt sein. Die Versteifungselemente können auch im wesentlichen mediendichte Wandungsbereiche in Form von Zwischen- bzw. Seitenwänden des Wabenkörpers aufbauen.

Die Versteifungselemente sind vorzugsweise, unabhängig von deren sonstiger Ausführung oder Anordnung, zugaufnehmend an dem Gehäuse festgelegt. Die Versteifungselemente können auch zugaufnehmend. an den Blechlagen befestigt sein oder diese lediglich unterstützen. Auch im Falle von parallel zu den Blechlagen angeordneten Versteifungselementen können diese durch die Blechlagen durchtreten. Zur Festlegung der Versteifungselemente können Kraft- oder Formschlußmittel vorgesehen sein, z.B. indem die Versteifungselemente verdrillt werden oder indem aus den Blechlagen Laschen ausgeklinkt und an den Versteifungselementen festgelegt werden. Die Versteifungselemente können auch durch Stoffschlußmittel an den Blechlagen festgelegt sein, z.B. durch Lote oder durch Beschichtungsmaterialien der Blechlagen, z.B. durch Katalysatorbeschichtungen.

Die Versteifungselemente sind vorzugsweise im Bereich der Stirnseiten des Wabenkorpers vorgesehen, d.h. auf Höhe der Stirnseiten oder im Bereich einer Tiefe von ein bis drei Kanalhöhen bzw. Blechlagenabstanden, d.h. im Bereich erhöhter Turbulenz des fluiden Meduims.

Der Wabenkörper kann jeweils beispielsweise durch einzelne Blechlagen oder ein gefaltetes Blechband aufgebaut sein. Die einzelnen Blechlagen können übereinander angeordnet sein, so daß ein im wesentlich quaderformiger Wabenkörper entsteht, die Blechlagen können auch ein Parallelepiped ergeben, die Blechlagen können jeweils auch über die ganze Breite oder an ihren Enden bogenförmig ausgebildet sein.

Die Erfindung betrifft des weiteren einen Wabenkörper mit Gehäuse, wobei das Gehäuse einen stromaufwärts des Wabenkörpers angeordneten Zuführstutzen und einen stromabwärts des Wabenkörpers angeordneten Ableitungsstutzen zur Zuführung bzw. Ableitung eines fluiden Mediums aufweist, wobei einer oder beide der Stutzen einen Winkel zur Gehäuse- bzw. Wabenkörperlängsrichtung aufweisen können. Vorteilhafterweise sind an der dem abgewinkelten Stutzen zugeführten Stirnseite des Wabenkörpers Mittel zur Umlenkung der Strömungsrichtung des fluiden Mediums vorgesehen, um Druckverluste im Einströmbereich des Wabenkörpers zu vermeiden und gleichzeitig im Einströmbereich eine erhöhte Wirksamkeit des Katalysators zu erzielen.

Die Erfindung wird nachfolgend beispielhaft beschrieben und anhand der Figuren beispielhaft erläutert:

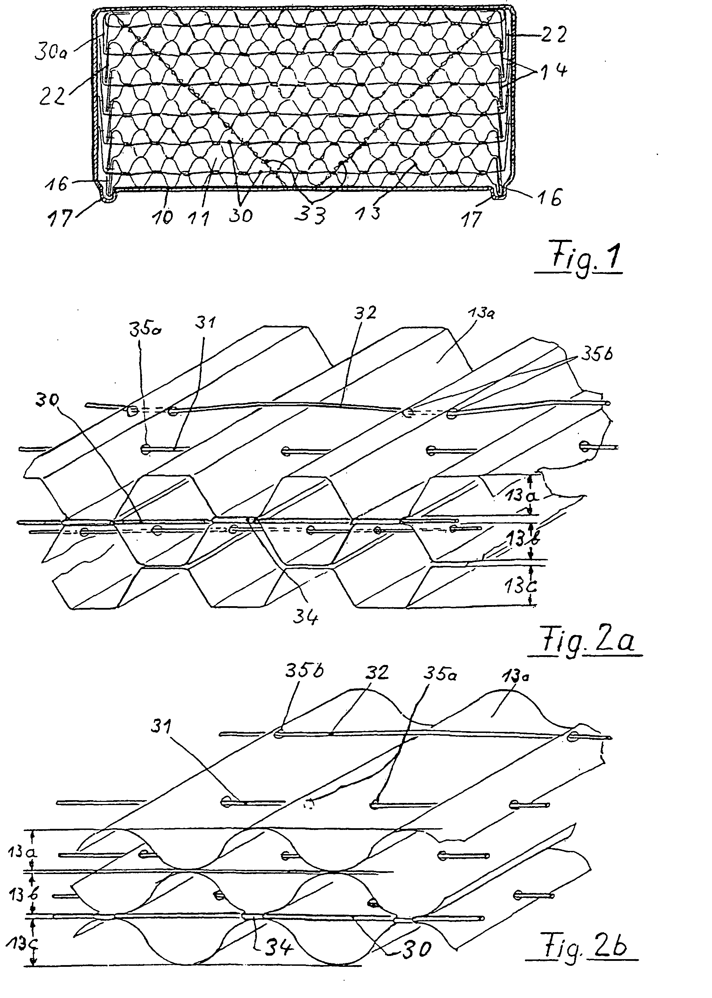

Figur 1 zeigt schematisch und im Querschnitt senkrecht zur Wabenkörper-Längsachse einen quaderförmigen Wabenkörper mit einer Wabenstruktur 11 aus nur einer Teilwabe in einem Gehäuse 10. Die Wabenstruktur besteht aus dünnem Blechband mit einfach-wellenförmig strukturierten Blechabschnitten 13, die eben übereinander geschichtet sind. An den beiden Längsseiten der Teilwabe sind die Abschnitte 13 mit ihren freien Enden 14 durch Abkantung unter einem Winkel von ca. 90 Grad zu Außenwandbereichen 22 aufgebaut, welche mit ihren Enden 16 mittels der Sicken 17 mit dem Gehäuse 10 fest verbunden sind.

Zwischen jeder zweiten Blechlage sind Drähte 30 zur Stabilisierung der Wabenstruktur eingelegt und mit ihren Enden 30a in die beiden seitlichen Außenwandbereiche der Teilwabe fest eingebunden. Die stirnseitig angeordneten Drähte 30 bewirken zugleich eine gewisse Verwirbelung des einströmenden Mediums und wirken so als Strömungsumlenkmittel. Ferner sind zur Stabilisierung der Wabenstruktur diagonal verlaufende Drähte 33 in die Wabenstruktur eingeflochten.

Figur 2a zeigt einen Ausschnitt eines Wabenkörpers im Querschnitt aus ebenen übereinander geschichteten trapezförmig strukturierten dünnen Blechlagen 13a,b,c, die an ihren Faltungsenden durch Stege 34 miteinander verbunden sind. Durch gegenüberliegende Blechlagen werden hexagonale Strömungskanäle ausgebildet. Die Wabenstruktur wird durch parallel zu den Blechlagen 13a,b,c verlaufende Drähte stabilisiert. Der in der Faltungslinie angeordnete Draht 30 ist in den Faltungsstegen 34 eingeklemmt, der Draht 31 in einer Zwischenhöhe der Blechlage durch die Lochungen 35a lose durch das Blech geführt und der Draht 32 an dem oberen Rand der Blechlage a mit Hilfe der Lochungen 35b mit einem einem Höhenversatz bei jeder Wellung in das Blech eingeflochten und reibschlüssig an diesem festgelegt. Die einzelnen Drähte 30, 31, 32 können alternativ oder gleichzeitig in der Wabenstruktur vorgesehen sein, die Drähte 31, 32 können auch schräg zu den Wellungen verlaufen. Im Bereich der Stirnseiten bzw. im Einströmbereich des Wabenkörpers angeordnete Drähte bzw. Profilelemente wirken zugleich als das Verwirbelungs bzw. Strömungsumlenkmittel.

Figur 2b zeigt einen entsprechenden Ausschnitt aus einer Wabenstruktur aus ebenen übereinander geschichteten einfachwellenförmig bzw. sinus-förmig strukturierten dünnen Blechlagen, wobei die Stabilisierung durch die Drähte 30, 31, 32 wie in Fig. 2a beschrieben erfolgt.

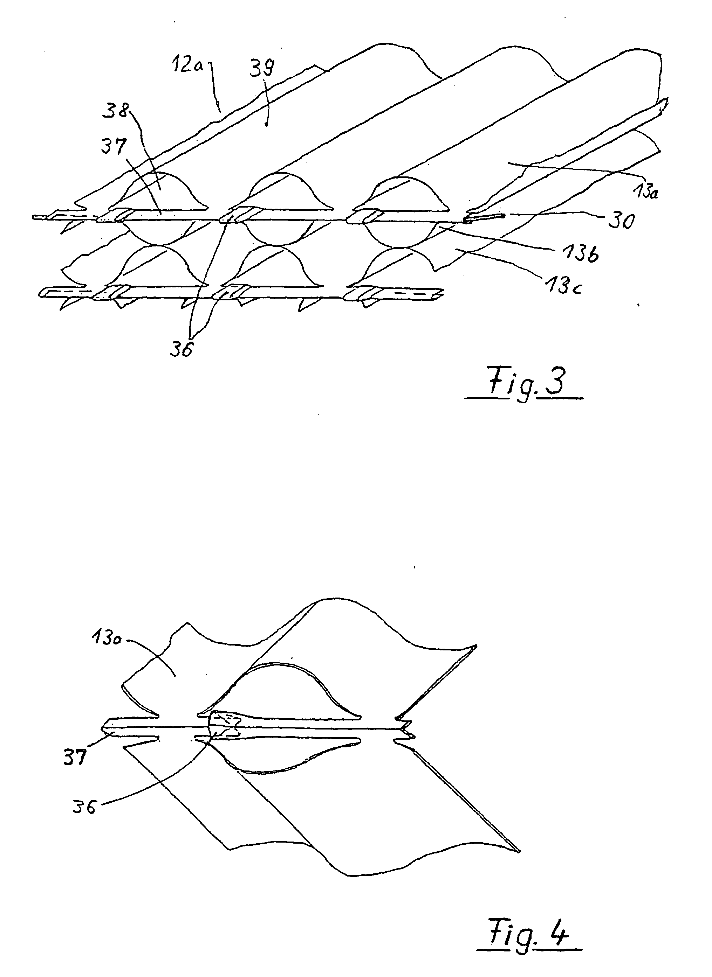

Figur 3 zeigt einen Ausschnitt aus einem Wabenkörper bestehend aus einem zick-zack-förmig abgelegten Blechband 12a mit gewellten Blechlagen 13a, 13b und 13c. Das Versteifungselement ist als einstückig an die Blechlagen angeformter Faltungssteg 37 ausgeführt, der von den Stirnseiten der Strömungskanäle 38 nach außen vorsteht und parallel zur Mittelebene der Strömungskanäle 38 verläuft. Der durch einen Einschnitt oder eine Ausstanzung von der gewellten Wandung 39 des Strömungskanals getrennte Faltungssteg 37 weist auf Höhe jedes Strömungskanals 38 eine Faltungsstelle 36 auf, so daß der Faltungssteg auf den Durchmesser des Strömungskanals 38 verkürzt ist. Die Ausbildung der Faltungsstelle 36 kann zusammen mit der Wellung der Blechlagen 13a, 13b und 13c erfolgen oder ausgehend von einem gekrümmten Faltungssteg. In den Faltungssteg 37, der sich durchgehend über den gesamten oder einen Teil des Wabenkörpers erstreckt, sind zusätzliche Stabilisierungsdrähte 30 eingeklemmt.

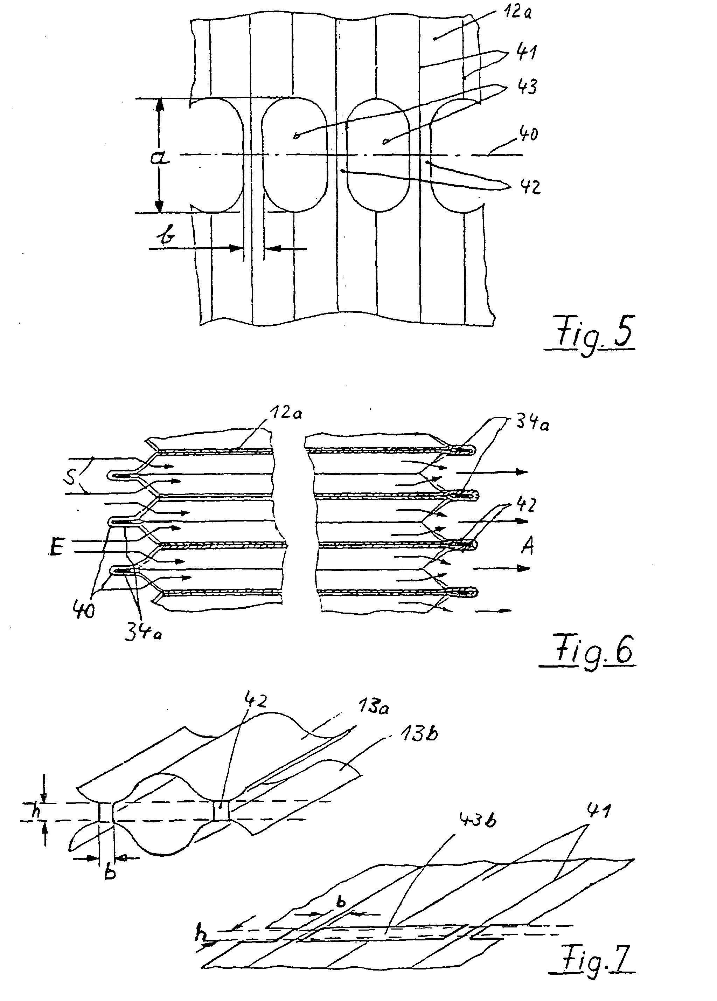

Figur 4 zeigt einen Ausschnitt aus der Wabenstruktur nach Fig. 3 im nur teilweise zusammengefalteten Zustand, wobei die Blecheinstülpung zur Ausbildung der Faltungsstelle 36 erkennbar ist.

Figur 5 zeigt einen Ausschnitt aus einem ursprünglich glatten dünnen Blechband zur Herstellung eines erfindungsgemäßen Wabenkörpers. Zur Vorformung des dünnen Blechbandes 12a, sind in das Band in Längsrichtung desselben verlaufende Rillen 41 warm mittels Prägerollen oder Laserstrahlen eingeprägt. Senkrecht dazu verlaufen Faltungslinien 40, um eine zick-zack-förmige Faltung des Blechbandes zu einem Stapel zu ermöglichen. Auf Höhe der Faltungslinien 40 sind schmale Stege 42 einer Breite b durch Ausstanzungen 43 mit einer Erstreckung a in Längsrichtung des Bandes ausgebildet. Durch die Erstreckung a werden die Eintrittsöffnungen der einzelnen Kanäle der fertigen Wabenstruktur hinsichtlich deren Höhe oder die maximale Breite von Versteifungselementen bestimmt, die zwischen die Stege eingelegt werden. Die stirnseitig vorstehenden Stege und die eingelegten und damit in die Strömungskanalquerschnitte hineinragenden Profilelemente dienen hierbei als Strömungsumlenkungsmittel bzw. zur zusätzlichen Verwirbelung des einströmenden Mediums. Angrenzend an die Blechabschnitte 12a können in den Ausstanzungen auch Bereiche verbleiben, mittels derer senkrecht oder parallel zu den Blechen verlaufende Versteifungselemente formschlüssig befestigbar sind.

Figur 6 zeigt einen vertikalen Längsschnitt durch einen erfindungsgemäßen Wabenkörper. Durch je zwei übereinander gelegte Rinnen des Blechbandes 12a werden Strömungskanäle aufgebaut, die von einem Abgas in Strömungsrichtung S durchströmbar sind. Auf der Eintritts- E und auf der Austrittsseite A der Wabenstruktur sind in die Faltungslinien 40 schmale dünne Bänder 34a eingelgt, die von den Stegen 42 gehalten werden. Die Stege 42 sind vor den Eintrittsöffnungen E angeordnet und durch die eingeleten Bänder im Querschnitt verbreitert, wodurch eine katalytisch wirksame Anordnung mit erhöhter Verwirbelung des einströmenden Mediums gegeben ist.

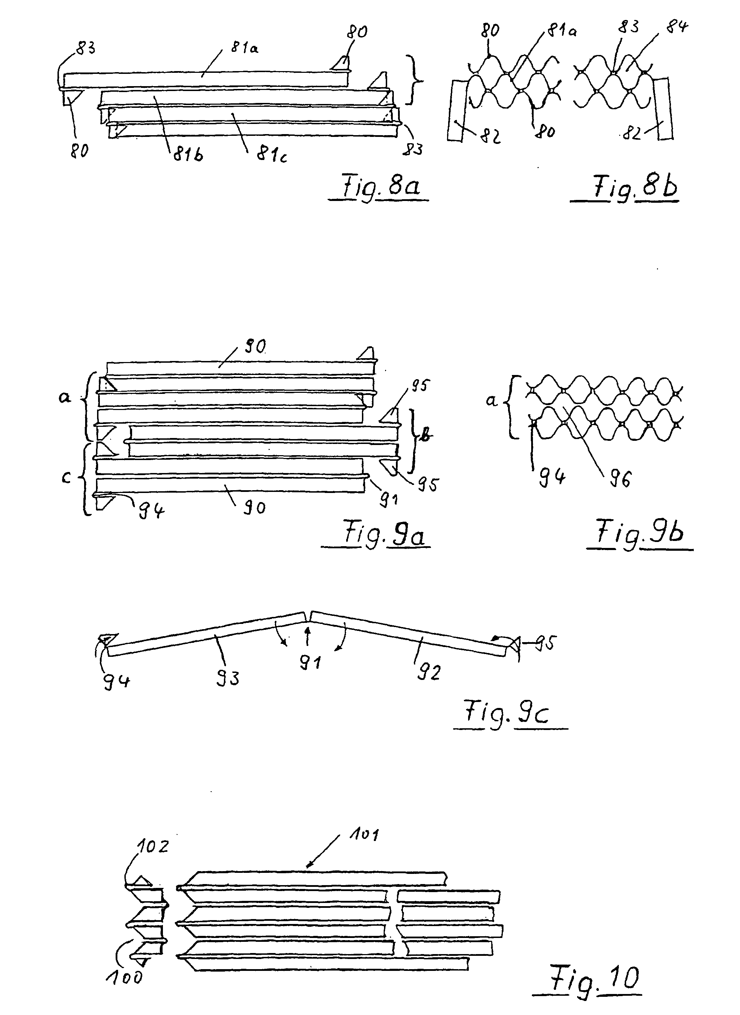

Wie in Figur 7, links, gezeigt kann der die Blechlagen 13a, 13b verbindende Faltungssteg 42 eine gewisse Höhe h aufweisen, so daß die Blechlagen 13a, 13b voneinander beabstandet sind. Um ein Einknicken des Steges 42 zu verhindern kann zwischen die Blechlagen 13a, 13b ein entsprechend dimensioniertes Band oder Profilstück eingelegt werden, das zugleich der Verwirbelung bzw. Strömungsumlenkung des einströmenden Mediums dient. Es können an den Blechlagen auch Ausklinkungen vorgesehen sein, die sich auf der gegenüberliegenden Blechlage abstützen.

Gemäß Figur 7, rechts, kann die Struktur nach Figur 7, links, durch rechteckige Ausstanzungen 43b und Ausbildung von Faltungslinien bzw. Deformationszonen sowie nachfolgende Faltung und Stauchung der Blechlagen erzeugt werden.

Fig. 8a (links) zeigt Versteifungselemente und Strömungsumlenkmittel in Form von Einsatzstücken 80, die jeweils einstückig an den beiden Enden der Blechlagen 81a angeformt sind und in den durch die Blechlagen 81b, 81c gebildeten Strömungskanal einführbar und reibschlüssig festlegbar sind. Fig. 8b (rechts) zeigt eine Frontansicht einer derartigen Blechlage. Die seitlichen Endbereiche der Blechlage 81a sind mit Abfaltungen 82 versehen, die mit korrespondierenden Abfaltungen darüber bzw. darunter befindlicher Blechlagen verbindbar sind und an Sicken des entsprechenden Gehäuses festlegbar sind. Die Einsatzstücke führen aufgrund der erhöhten Lagenstärke im Einströmbereich des Wabenkörpers zu einer Querschnittsverringerung der Strömungskanäle und damit zu einer verstärkten Verwirbelung des einströmenden Mediums, sie weisen zusätzlich auch stirnseitig von dem Wabenkörper vorstehende Stege 83 als Strömungsumlenkmittel auf, die auch zur Wabenkörperlängsachse schräg gestellt sein können. Die Stege 83 können auch die einen oder mehrere Strömungskanäle 84 überbrücken.

Figur 9a-c zeigt eine Ausführungsform, bei welcher der Wabenkörper aus identischen Blechabschnitten 90a,b,c aufgebaut wird, welche jeweils zwei über einen Abknickbereich 91 miteinander verbundene gewellte Abschnitte 92, 93 aufweisen, an deren freien Enden über die Verbindungsstege 94, die den Stegen 83 nach Fig. 8 entsprechen und wie diese ausgebildet sein können, die Einsatzstücke 95 einstückig angeformt sind. Im zusammengefalteten Zustand sind die beiden Einsatzstücke 95 an derselben Seite des Blechabschnittes 90 angeordnet, so daß bei jeweils um 180° zueinander verdrehter Anordnung der Blechabschnitte 90 die Einsatzstücke der benachbarten Blechlagen in die durch den Blechabschnitt 90 gebildeten Strömungskanal 96 stirnseitig eingreifen können.

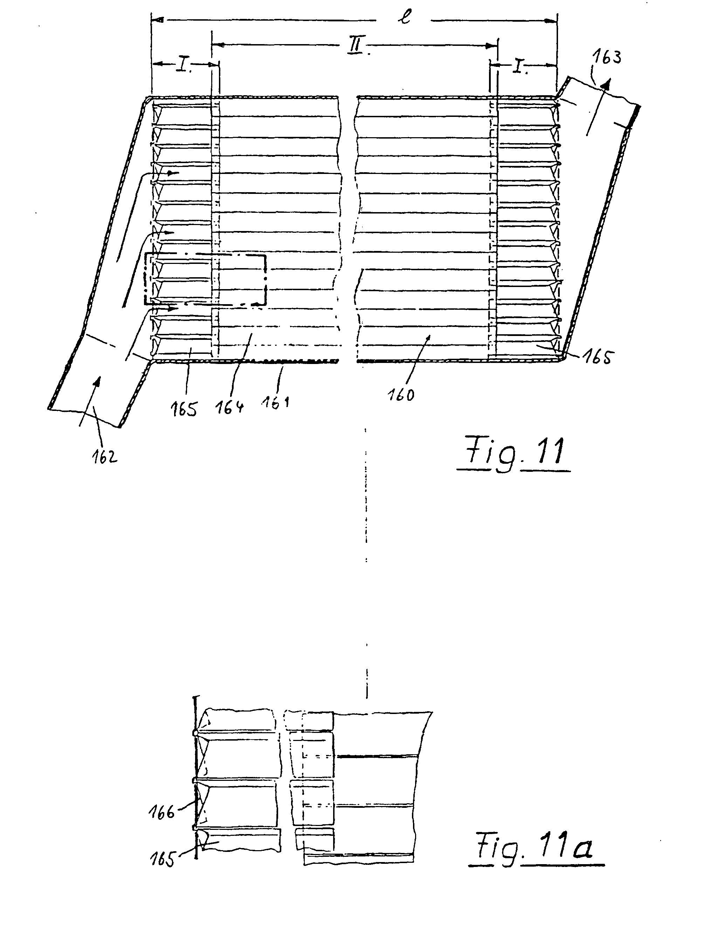

Figur 10 zeigt eine Ausführungsform mit einem separaten Einsatzstück 100, welches sich der Höhe nach über mehrere Strömungskanäle eines zickzackförmig abgelegten Blechbandes 101 erstreckt und stirnseitig in diese eingreifen kann. Ein entsprechendes Einsatzstück kann auch an dem gegenüberliegenden stirnseitigen Ende des abgelegten Blechbandes eingesteckt werden. Die Kontur der Einsatzstücke entspricht in den gezeigten Ausführungsbeispielen derjenigen der Strömungskanäle, was jedoch nicht notwendig ist. Das Einsatzstück weist stirnseitig von dem Wabenkörper vorstehende Stege 102 auf, die den Stegen 83 nach Fig. 8 entsprechen.

Figur 11 zeigt einen Wabenkörper 160, der in einem Gehäuse 161 mit Gaseinlaß 162 und Gasauslaß 163 versehen ist. Die durch Zusammenwirken der Blechwellungen benachbarter Blechlagen definierten Strömungskanäle 164 des Wabenkörpers werden hierbei schräg angeströmt. Die einzelnen Blechlagen des Wabenkörpers werden (siehe Fig. 11a) an Ein- und Ausströmbereich durch je ein separates Einsatzstück 165 miteinander verbunden, die zugleich an ihren freien Enden durch die Anordnung von abgeschrägten Bereichen 166 derart geformt sind, daß die Eintrittsöffnung in die Strömungskanäle in Strömungsrichtung größer ist als der Querschnitt der Strömungskanäle in einer Ebene senkrecht zu deren Längsrichtung. Hierdurch kann die katalytische Wirksamkeit des Wabenkörpers im Eintrittsbereich des zu reinigenden Gases in die Strömungskanäle erhöht werden bzw. im Austrittsbereich Druckverluste aufgrund von Verwirbelungen vermindert werden. Durch die als Strömungsumlenkmittel wirkenden Einsatzstücke werden zugleich die Ein- und Ausströmbereiche des Wabenkörpers z.B. durch eine Erhöhung der Wanddicke stabilisiert, wohingegen im mittleren Bereich des Wabenkörpers die Kanäle unverändert mit einem größeren Querschnitt verbleiben, z.B. mit sich über die gesamte Breite erstreckenden Spalten, die zwar weniger stabil sind aber einen Fluidaustauch quer zum Wabenkörper ungehindert zulassen.

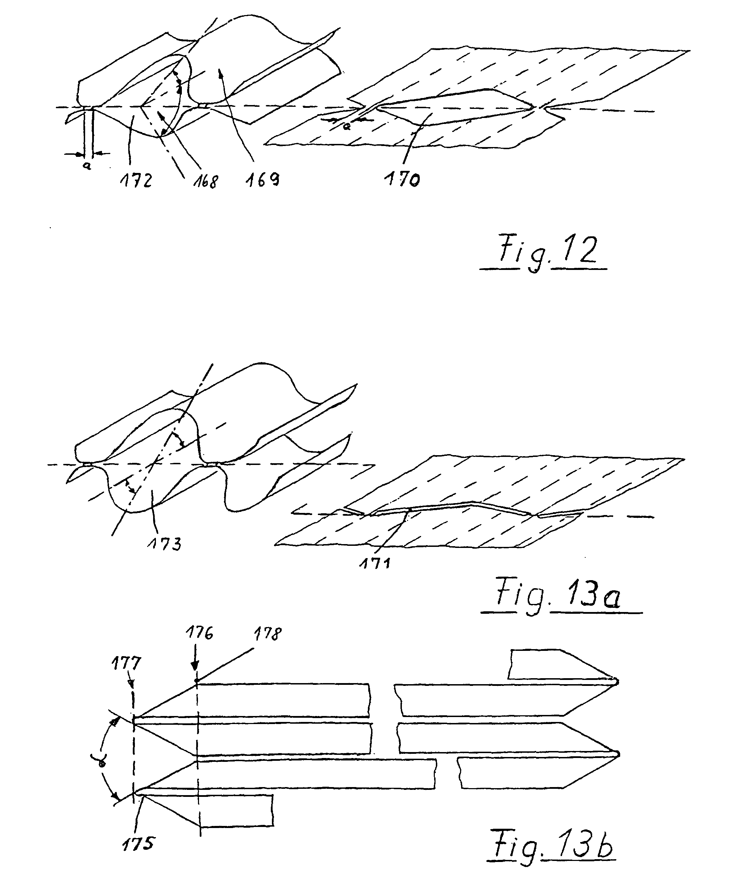

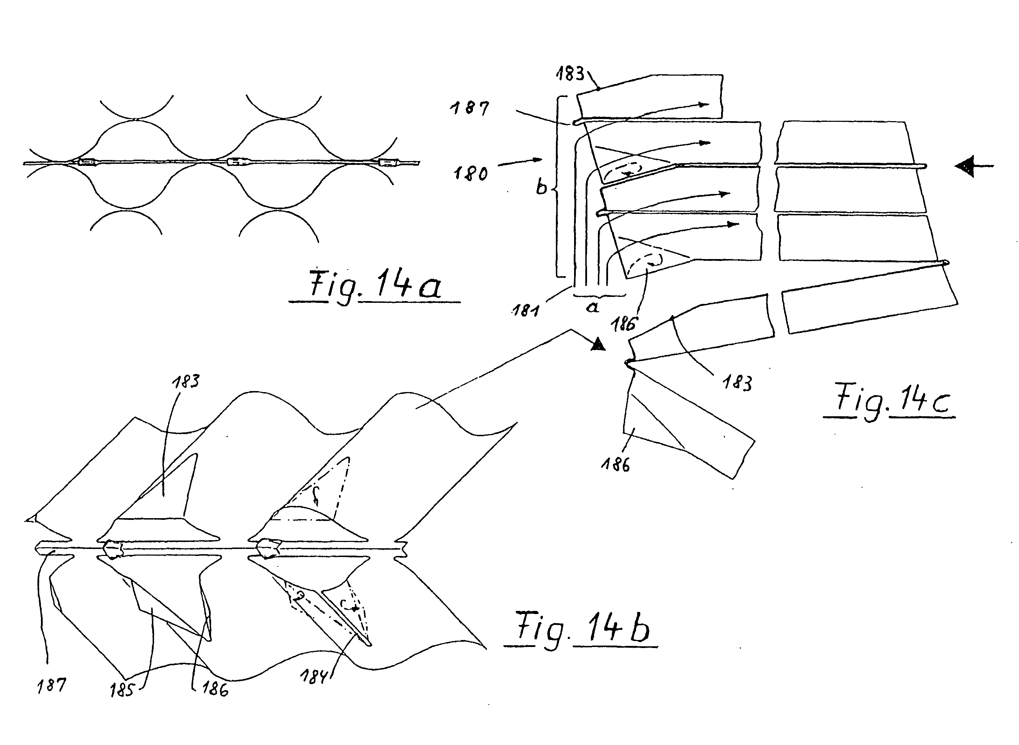

Die Figuren 12 und 13 veranschaulichen, daß durch geeignete Formgebung der Ausstanzungen 170 bzw. Einschnitte 171, die in dem gezeigten Ausführungsbeispiel rautenförmig bzw. V-förmig ausgeführt sind, die Endbereiche 169 der einzelnen Strömungskanäle derart strukturierbar sind, daß sie stirnseitig einen anderen Querschnitt bzw. Kontur aufweisen als die von den Enden des Wabenkörpers beabstandeten Bereiche der Strömungskanäle bzw. die Einhüllende des Stirnbereichs des gesamten Wabenkörpers, was z.B. der Fall ist, wenn die Stirnflächen der Strömungskanäle nicht senkrecht zur Strömungskanallängsrichtung verlaufen. Die Strömungsverhältnisse vor den Einströmbereichen in die Strömungskanäle, die durch die vorstehenden Blechabschnitte 172, 173 definiert werden, sowie deren Lage ist hierdurch bestimmbar, so daß die Einströmbereiche des Wabenkörpers den jeweiligen Anforderungen anpassbar sind.

Allgemein gesagt sind somit, wie auch in Figur 13b dargestellt, Mittel 175 vor bzw. nach dem Ein- und/oder Ausströmbereich eines Strukturkörpers vorgesehen, die axial von den Wabenkörper- bzw. Strukturkörperstirnseiten 176 vorstehen und eine Strömungsumlenkung des Mediums bezüglich der Hauptströmungsrichtung innerhalb des Strukturkörpers bzw. dessen Längsrichtung bewirken. Die Strömungsumlenkung kann z.B. in Art einer makroskopischen Strömungsrichtungsänderung erfolgen oder auch z.B. in Art einer Verwirbelung, wie an den Vorder- bzw-Ablenkkanten 175 der Einschnitte in Figur 13b. Die Mittel können jedem Strömungskanal oder Strömungspfad separat zugeordnet sein. Die Erstreckung der Mittel in Strömungsrichtung kann klein sein gegen die Strukturkörperlänge, z.B. im Bereich einiger (z.B. 10) oder weniger als eines Kanal- bzw. Strömungspfaddurchmessers. Es erfolgt somit eine kontinuierliche oder schrittweise Änderung der Strömungsverhältnisse durch Strukturelemente im Einströmbereich des Strukturkörpers über eine Tiefe ausgehend von der stirnseitigen Einhüllenden 177 der vorstehenden Strömungsumlenkmittel über eine gewisse Tiefe, die z.B. 0,5 bis 10 (ohne hierauf beschränkt zu sein) der Strömungskanalweiten bzw. der Abstände der Kernströmungen, d.h. der Strömungspfade höchster Strömungsgeschwindigkeiten, entsprechen kann. Die Mittel können einstückig an den Blechlagen angeformt sein, z.B. durch die oben beschriebenen Einschnitte oder durch axiale Verlängerung strukturierter oder ebener Blechlagen erzeugt werden, oder als separate Bauelemente ausgeführt sein, z.B. in Form sich axial erstreckender Drähte. Die Mittel können zentrisch zu Strömungskanälen bzw. Strömungspfaden mit höchster Strömungsgeschwindigkeit angeordnet oder auch jeweils zwischen diesen. Das axiale Vorstehen der Strömungsumlenkmittel bezieht sich auf die Stirnseite bzw. stirnseitige Einhüllende 178 des Wabenkörpers, die den Beginn der einzelnen Strömungskanäle bzw. Strömungspfade, die sich aus einer Aufeilung der auf den Strukturkörper treffenden Gesamtströmung in Teilstrome ergeben, im Einströmbereich des Strukturkörpers definiert. Die vorstehenden Mittel können somit entsprechend auch bei Wabenkorpern mit konisch geformter Stirnseite vorgesehen sein, die z.B. durch Teleskopieren eines gewickelten Bandes erzeugbar sind. Die Mittel können insbesondere ggf. auch bei Strukturkorpern ohne erfindungsgemäße Versteifungselemente verwirklicht sein, ggf. auch bei Strukturkörpern mit teilweise oder ganz ungehindertem Fluidaustausch in einer oder zwei Querrichtungen. Die freien Enden der vorstehenden Bereiche können mit dem mittig zwischen diesen liegenden Stirnseitenbereich einen Winkel a zwischen 150-20°, vorzugsweise 90-30° einschließen.

Gemäß Figur 14 können die Eintrittsbereiche 180 in den Wabenkörper, in denen eine turbulente Gasströmung vorherrscht, schaufelartig unter Vergrößerung des inneren Umlenkradius der Strömungsfäden ausgebildet werden, und um die Einströmöffnung der Strömungskanäle zu vergrößern und annähernd senkrecht zu der durch die Pfeile 181 verdeutlichten Strömungsrichtung auszurichten sowie axial versetzt zu staffeln. Hierzu sind an dem in Strömungsrichtung abgewandten Ende der Strömungskanalenden abgeflachte Bereiche 183, welche eine Umlenkradiusvergrößerung bewirken, vorgesehen, wobei in die gegenüberliegenden Bereiche Schlitze 184 eingebracht werden und die freien Enden 185, 186 nach außen gebogen werden, bis daß sie annähernd mit den abgeflachten Bereichen des gegenüberliegenden Strömungskanals zur Anlage kommen. Des weiteren sind die durch eingelegte Bänder verstärkte und verdickte Faltungsstege 187 in Richtung auf die Einströmrichtung abgewinkelt und wirken hierdurch als vorgesetzte Leitschaufeln. Eine entsprechend entgegengesetzte Formgebung kann im Ausströmbereich des Wabenkörpers vorgesehen werden.

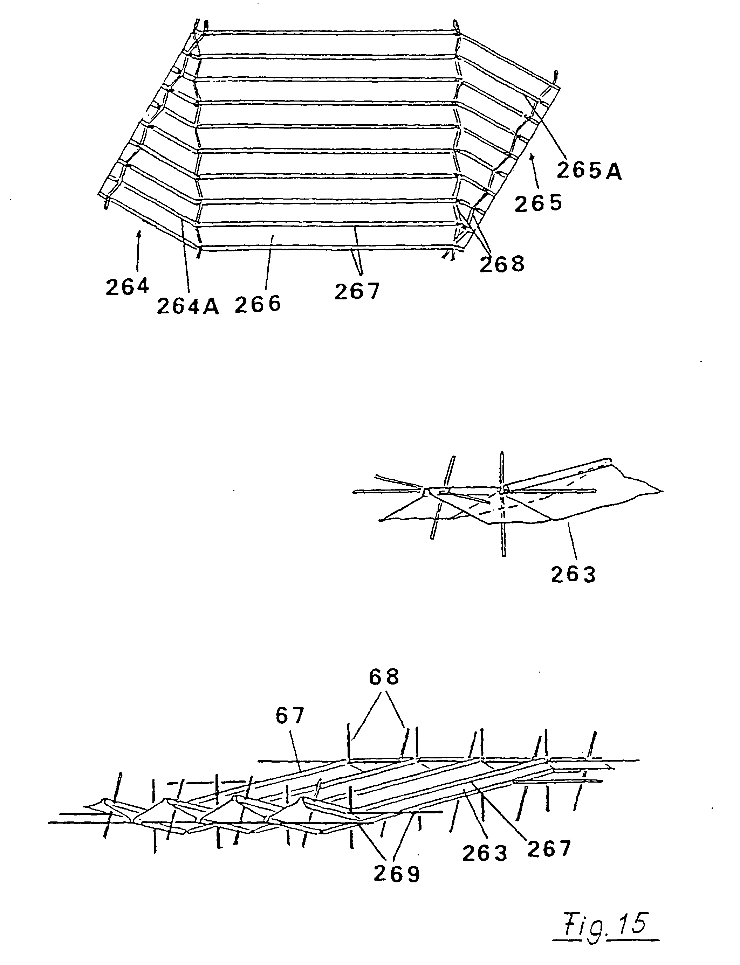

Figur 15 zeigt eine Anordnung von Blechlagen 263 mit sich entlang der Strömungsrichtung ersteckenden Faltungsstegen 267 zur Versteifung der Wabenstruktur und zur Konversionserhöhung. Die Blechlagenabschnitte 264a, 265a der Endbereiche 264, 265 des Wabenkörpers sind gegenüber dem mittleren Bereich 266 abgewinkelt, wozu Einschnitte in die Faltungsstege 267 eingebracht sind. Hierdurch werden Druckverluste im Einströmbereich des Wabenkörpers bei schräger Anströmung zu den Blechlagen 263 vermindert. Die Blechlagen sind auf Höhe der Einschnitte sowie in den Einströmbereichen durch in den Stege 267 eingelegte, sich quer zur Strömungsrichtung erstreckende Versteifungsdrähte 269 abgestützt. Des weiteren sind senkrecht zu den Blechlagen 263 verlaufenden Versteifungsdrähtedrähten 268 vorgesehen die mit den Drähten 269 teilweise verbunden sind.

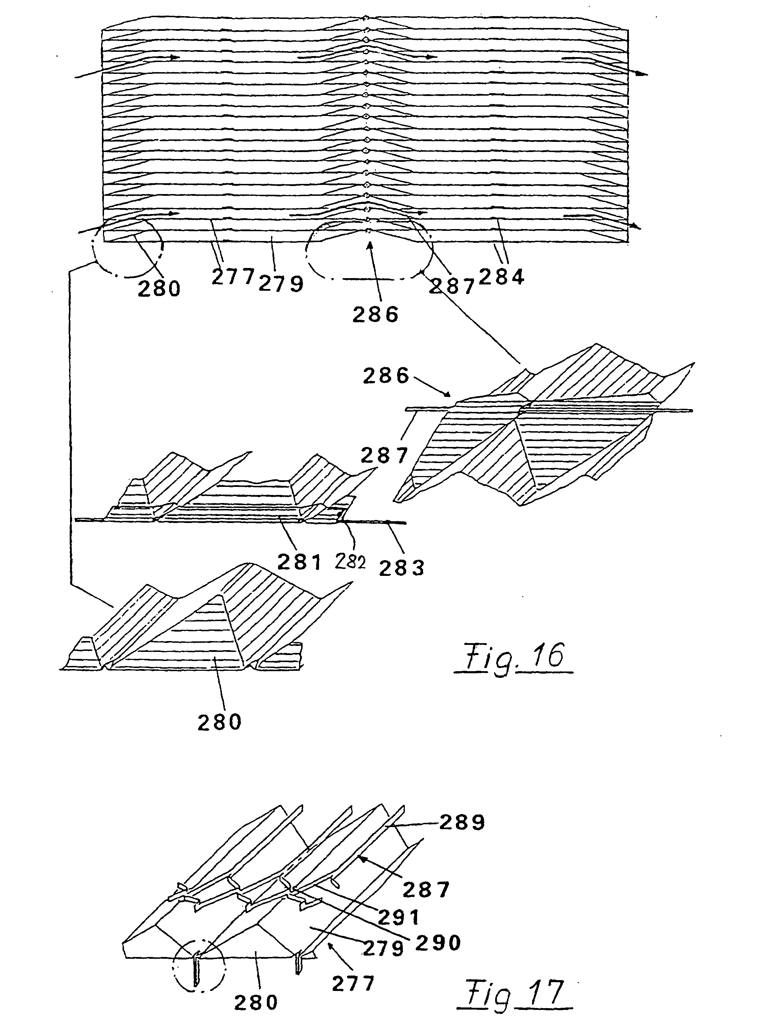

Figur 16 zeigt einen quaderförmigen Wabenkörper aus einzelnen Blechen 277 mit dreieckigen Rinnen 279 und sich über die gesamte Breite der Blechlagen erstreckenden Strömungskanälen, die auch isometrisch ausgeführt sein können. Für eine wirbelarme Anströmung des Wabenkörpers schräg zu der Hauptebene der Blechlagen ist jede der Rinnen 279 an ihren Enden mit einer zum freien Ende des Wabenkörpers hinweisenden Abschrägung 280 versehen, die zur Anströmrichtung hin abgewinkelt ist und als Strömungsumlenkmittel fungiert. Die stirnseitigen Endbereiche 281 der Blechlagen 277 sind mit versteifenden Umbördelungen 282 versehen, in die zusätzliche Versteifungsdrähte 283 eingeklemmt sind. Des weiteren sind quer zu den Blechlagen 277 verlaufende Bänder 284 vorgesehen, die auf den Oberkanten der Rinnen 279 abgelegt sind und die darüber angeordnete Blechlage unterstützen.

Gemäß Figur 17 können zwischen den einzelnen Blechlagen 277 mit wellenförmiger Profilierung Streckmetallagen 287 eingelegt werden, wodurch zugleich der Abstand der Blechlagen wunschgemäß einstellbar ist. Die einstückigen Streckmetallagen weisen hierbei langgestreckte Abschnitte 289 in Form von schmalen Bändern auf, die senkrecht zu den Hauptebenen der Blechlagen angeordnet sind sowie einander über Kreuzungspunkte verbundene Verbindungsstege 291. Die Kreuzungspunkte sind in Einbuchtungen 290 der Blechlagen verschiebungssicher eingelegt und können hier zusätzlich befestigt werden, z.B. durch Lotverbindungen oder durch sich vertikal zu den Blechlagen erstreckende Versteifungsdrähte. Die Streckmetallagen können an seitlichen Faltungsstegen der Blechlagen festgelegt sein. Entsprechend zu dem Blechband können auch die Streckmetallagen als mäanderförmig abgelegtes Band ausgeführt sein. Die umströmbaren Profile 289 verbessern gleichzeitig die Schadstoffkonversion in den Kanälen.

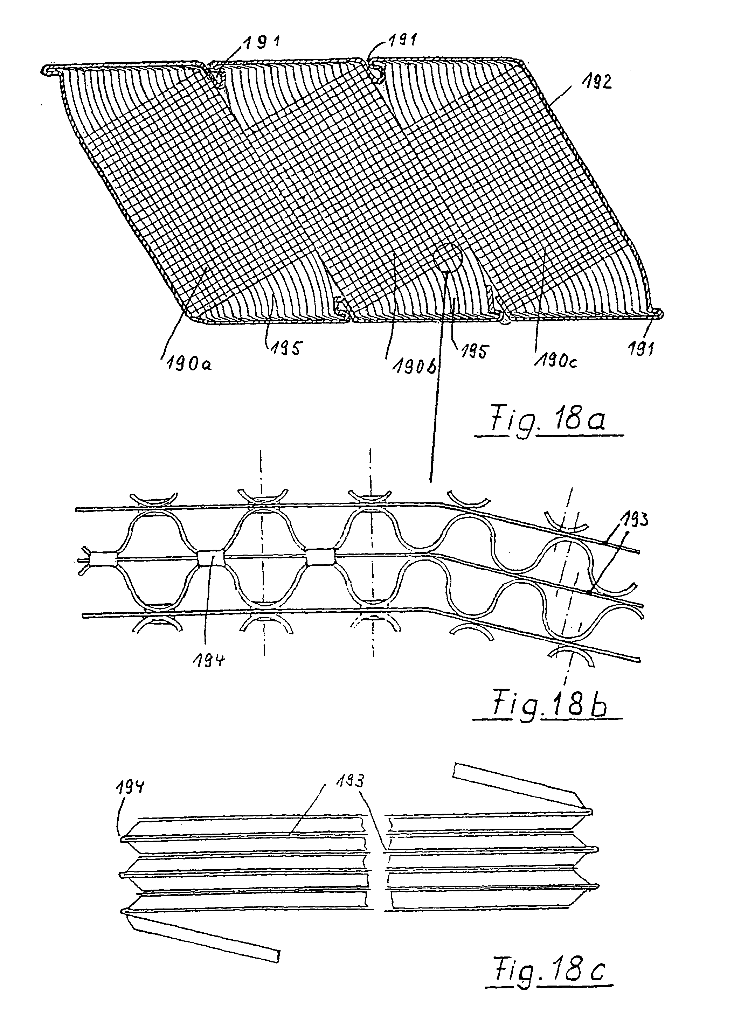

Figur 18a zeigt einen aus drei Teilwaben 190a,b,c bestehenden Wabenkörper, der über die Sicken 191 in dem Gehäuse 192 befestigt ist. Die Teilwaben werden jeweils durch ein zickzackförmig abgelegtes Blechband erzeugt, wobei zwischen den einzelnen Blechlagen Versteifungsdrähte 193 oder Bleche eingelegt sind. Figur 18b (Mitte) zeigt eine vergrößerte Stirnansicht der Wabenstruktur. Hiernach sind in dem in Figur 18a schraffiert dargestellten Bereich die Versteifungsdrähte in den die einzelnen Blechlagen verbindenden Stegen 194 eingeklemmt, wodurch eine vergleichsweise biegesteife Struktur entsteht. In den an das Gehäuse angrenzenden Bereichen 195 sind die Verbindungsstege entfernt, so daß die Blechlagen über die in diesem Bereich aus der Stirnebene zurückversetzten Versteifungsdrähte oder Bleche bogenförmig ausgebildet werden können, indem sich die Wellungsscheitel lagenweise gegeneinander verschieben können, ohne ineinanderzurutschen. Hierdurch entstehen Dehnungsbereiche mit einer vergleichsweise flexiblen Wabenstruktur und die Wabenkörper können an nichtrechtwinklige Gehäuseformen einfach angepaßt werden. Bogenförmige oder durch Lagenrelativverschiebung biegbare Bereiche können auch innerhalb einer Teilwabe vorgesehen sein, indem an den Stirnseiten dieser Bereiche die Stege 194 entfernt werden.

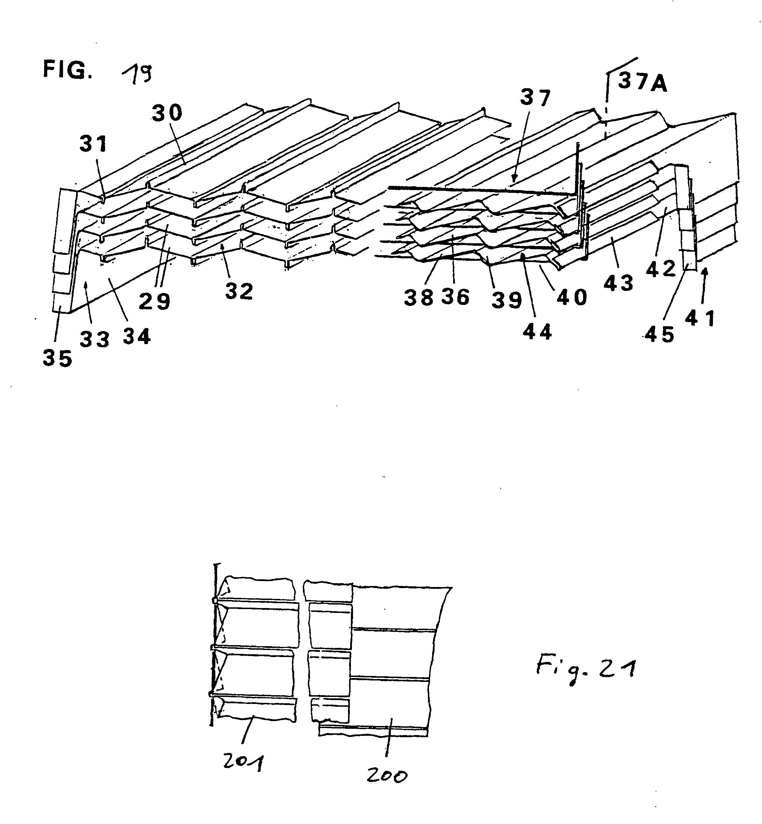

Figur 19 zeigt einen Wabenkörper, bei dem die Mittel zur Strömungsumlenkung in Form von stirnseitig von dem Wabenkörper vorstehenden Blechlagenabschnitten ausgebildet sind, wobei ein seitliches Einströmen des Fluides bezogen auf die Wabenkörperlängsrichtung in die vorstehenden Blechlagenabschnitte ermöglicht ist. Die Seitenwände des Wabenkörpers sind hiezu mit _{E}inströmöffungen versehen. Der Wabenkörper kann aus einem gefalteten Blechband aufgebaut sein, wobei sich die Strömungskanäle über die gesamte Wabenkörperbreite erstrecken können. Ein Teil der die Seitenwände bildenden Blechabfaltungen sind unter Ausbildung seitlicher Einströmbereiche abgeknickt.

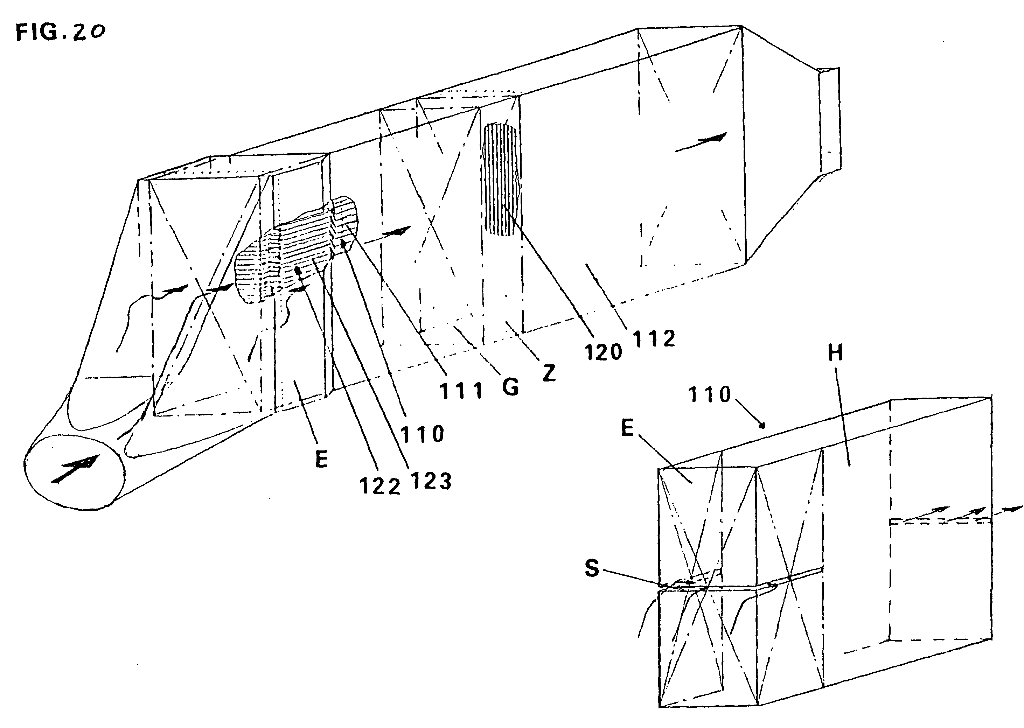

Figur 20, unten, zeigt eine schematische Darstellung eines Wabenkörpers 110, der durch voneinander beabstandete Blechlagen 123 aufgebaut ist, so daß die Strömungskanäle im Wabenkörper und im Einströmbereich sich über die gesamte Breite des Wabenkörpers erstrecken. Die Kanäle im Einströmbereich und im Wabenkörper können auch unterschiedliche Querschnitte aufweisen und sich jeweils nur über einen Teil der Breite des Wabenkörpers erstrecken, wobei insbesondere die Kanäle des Wabenkörpers auch isometrische, z.B. mit sechseckigem oder sinusförmigen Querschnitt, ausgeführt sein können. Der Hauptteil H des Wabenkörpers wird durch annähernd gasdichte Seitenwände begrenzt, die durch die seitlichen Faltungsstege 111 der Blechlagen aufgebaut werden. Das Gehäuse G gemäß Figur 20, oben, kann dabei zur Abstützung der Seitenwände eng an den Faltungsstegen anliegen. Im Einströmbereich E des Wabenkörpers, dessen Anordnung unabhängig von der Kanalausbildung des strömungsabwärts nachfolgenden Wabenkörperbereichs vorteilhaft sein kann, ist das Gehäuse seitlich von den Blechlagen beabstandet und die Strömungskanäle sind beidseitig geöffnet, z.B. durch Umbördelung oder Entfernung der Faltungsstege, wie in Figur 20, oben, gezeigt, wobei die Strömungskanäle im Einund/oder Ausströmbereich sich auch nur über einen Teil der Trägerkörperbreite erstrecken können und jeweils auch einseitig geöffnete Strömungskanäle vorgesehen sein können. Wie durch die Strömungspfeile angedeutet wird, kann ein Medium sowohl frontal als auch seitlich in die U-förmig geöffneten Strömungseinlässe S eindringen, wodurch die Effektivität eines entsprechenden Katalysators wesentlich gesteigert wird.

Wie in Figur 20, oben, angedeutet, kann ein hinter dem ersten Wabenkörper angeordneter zweiter Wabenkörper eine unterschiedliche Orientierung der diesen aufbauenden Blechlagen aufweisen, so daß gemäß dem Ausführungsbeispiel die Blechlagen der beiden Wabenkörper um 90° zueinander verdreht sind. Die Wabenkörper sind zur Ermöglichung einer Homogenisierung des Mediums in Längsrichtung durch den Zwischenbereich Z voneinander beabstandet.

Für verschiedene Anwendungszwecke kann es entsprechend auch vorteilhaft sein, bei schräger Anströmung des Wabenkörpers, wie dies z.B. bei einem Einlaßstutzen nach Figur 20 der Fall ist, die Blechlagen des in Einströmrichtung ersten Wabenkörpers derart anzuordnen, daß eine Anströmung parallel und nicht schräg zu den Blechlagen erfolgt, wie dies bei einer Anordnung gemäß dem zweiten Wabenkörper 112 gemäß Figur 20, oben, mit den Blechlagen 120 der Fall wäre. Die Blechlagen innerhalb des Wabenkörpers können dann in Fortführung der Blechlagen des Einströmbereichs angeordnet sein, gegebenenfalls auch als separate Blechabschnitte. Eine Verwirbelung an den Stirnkanten der Blechlagen wird hierdurch vermieden, wodurch günstigere Strömungsverhältnisse vorliegen.

Die Mittel zur Strömungsumlenkung können jeweils (Figur 21) auch als stirnseitig von dem Wabenkörper 200 vorstehende separate Vorsatzstücke 201 ausgeführt sein, die auch z.B. durch das Gehäuse unmittelbar vor dem Wabenkörper gehaltert sein können, wozu die Strömungsumlenkmittel auch stirnseitig an dem Gehäuse anliegen oder geringfügig von diesem beabstandet sein können. Die Strömungsumlenkmittel können hierzu beispielsweise durch gestapelte oder zick-zack-förmig gefaltete Blechlagen entsprechend den oben beschriebenen Ausführungsbeispielen aufgebaut sein, ohne hierauf beschränkt zu sein.

Es sei angemerkt, daß die erfindungsgemäßen Wabenkörper auch Stapel stark gekrümmter Blechlagen aufweisen können, die in einer Richtung gestapelt sein können. Vorgesehene Versteifungselemente können dabei der Biegung der Blechlagen folgen und mit diesen gegebenenfalls zugaufnaehmend verbunden sein.

Unabhängig von der Ausführung des Wabenkörpers können die vorgesehenen Versteifungselemente im wesentlichen starr, insbesondere aber auch elastisch ausgeführt sein, wobei die Elastizität kleiner oder bei entsprechender Anordnung auch größer als die der Blechlagen sein kann. Die elastischen Eigenschaften können sich auf den Wabenkörper unter Betriebsbedingungen beziehen, vorteilhafterweise sind sie im gesamten Bereich zwischen Betriebs- und Raumtemperatur gegeben.

Zusätzlich zu den einfachen Blechlagen vorgesehene Versteifungselemente sind vorteilhafterweise stirnseitig bzw. im Einströmbereich des Wabenkörpers und/oder auf Höhe der Strömungsumlenkmittel angeordnet.

## Patentansprüche

1. Wabenkörper, insbesondere Katalysatorträger, mit einer Vielzahl von übereinander gestapelt angeordneten Blechlagen (13,13a,133,263,277) zwischen denen von einem Fluid durchströmbare Kanäle (38) ausgebildet sind, und mit stirnseitigen Ein- bzw. Ausströmöffnungen, wobei zumindest im Bereich einer Stirnseite des Wabenkörpers (11) Mittel zur Strömungsumlenkung (30,37,102,172,173,183,264a,265a) des in die Kanäle einströmenden Fluids vorgesehen sind, **dadurch gekennzeichnet, daß** eine Vielzahl von Strömungsumlenkmitteln (30,37,102,172,173, 183,264a,265a) vorgesehen ist, die unmittelbar an der Stirnseite des Wabenkörpers (11) angeordnet sind und sich nach aussen oder in den Wabenkörper hinein erstrecken.

2. Wabenkörper nach Anspruch 1 , **dadurch gekennzeichnet, daß** die Mittel zur Strömungsumlenkung (172,173,183,264a,265a) quer zur Wabenkörperlängsrichtung verlaufen und Strömungsumlenkflächen aufweisen, die in einem Winkel von 45 ° oder weniger zur Wabenkörperlängsrichtung gestellt sind.

3. Wabenkörper nach einem der Ansprüche 1 bis 2, **dadurch gekennzeichnet, daß** die Erstreckung der Mittel zur Strömungsumlenkung (30,37,102, 172,173,183,264a,265a) senkrecht zur Schichtungsebene der Blechlagen (13,13a,133,263,277) oder zur Strömungsrichtung des fluiden Mediums eine Stärke von bis zu dem fünf- bis zehnfachen der Blechlagenstärke aufweisen.

4. Wabenkörper nach einem der Ansprüche 1 bis 3, **dadurch gekennzeichnet, daß** der Wabenkörper (11) Blechlagen aufweist, die stirnseitig jeweils mit vor- und zurückspringenden Bereichen (1,72,173) versehen sind.

5. Wabenkörper nach Anspruch 4, **dadurch gekennzeichnet, daß** die Blechlagen auf Höhe der vor- und zurückspringenden Bereiche (172,173) mit sich in Wabenkörperlängsrichtung erstreckenden Erhebungen oder Vertiefungen (169) versehen sind.

6. Wabenkörper nach einem der Ansprüche 1 bis 5, **dadurch gekennzeichnet, daß** der Wabenkörper (110) Mittel zur Strömungsumlenkung in Form von stirnseitig von dem Wabenkörper (110) vorstehenden Blechlagenabschnitten aufweist, und daß ein seitliches Einströmen des Fluides bezogen auf die Wabenkörperlängsrichtung in die vorstehenden Blechlagenabschnitte ermöglicht ist.

7. Wabenkörper nach einem der Ansprüche 1 bis 6, **dadurch gekennzeichnet, daß** der Wabenkörper gewellte Blechlagen (266) mit Scheiteln und Senken (267) aufweist, die beabstandet von den Stirnseiten mit Abschnitten (264a,265a) versehen sind, die gegenüber der Blechlagenebene abgewinkelt sind.

8. Wabenkörper nach Anspruch 7, **dadurch gekennzeichnet, daß** die Scheitel oder Senken (267) der Blechlagenwellungen beabstandet von den Stirnseiten mit diese durchtrennenden Einschnitten versehen sind und daß die stirnseitig zu den Einschnitten angeordneten Blechlagenabschnitte (264a,265a) gegenüber der Stapelebene der Blechlagen (266) abgewinkelt sind.

9. Wabenkörper nach einem der Ansprüche 1 bis 8, **dadurch gekennzeichnet, daß** die Mittel zur Strömungsumlenkung als sich parallel zu den Blechlagen und quer zu der Wabenkörperlängsrichtung erstreckende Profilelemente (30,283) ausgebildet sind, die sich in den Einströmquerschnitt des Wabenkörpers erstrecken.

10. Wabenkörper nach einem der Ansprüche 1 bis 9, **dadurch gekennzeichnet, daß** der Wabenkörper gewellte Blechlagen aufweist, die stirnseitig im Bereich der Scheitel und/oder Senken der Wellungen abgeflachte und geneigt zur Wabenkörperlängsachse verlaufende Abschnitte (183) aufweisen.

11. Wabenkörper nach einem der Ansprüche 1 bis 10, **dadurch gekennzeichnet, daß** der Wabenkörper Blechlagen aufweist, die im Bereich der Scheitel oder der Senken der Blechlagenwellungen stirnseitig endende und im wesentlichen in Längsrichtung des Wabenkörpers verlaufende Schlitze (184) aufweisen, und daß die an die Schlitze seitlich angrenzenden Bereiche der Blechlagen (185, 186) in Richtung auf die benachbarte Blechlage abgebogen sind.

12. Wabenkörper nach einem der Ansprüche 1 bis 11, **dadurch gekennzeichnet, daß** die Mittel zur Strömungsumlenkung als stirnseitig von dem Wabenkörper vorstehende, in die Kanäle des Wabenkörpers eingreifende Einsatzstücke (95,100,165) ausgeführt sind.

13. Wabenkörper nach einem der Ansprüche 1 bis 11, **dadurch gekennzeichnet, daß** die Mittel zur Strömungsumlenkung als stirnseitig von dem Wabenkörper vorstehende separate Vorsatzstücke (201) ausgeführt sind.

14. Wabenkörper nach einem der Ansprüche 1 bis 13, **dadurch gekennzeichnet, daß** der Wabenkörper aus einem zick-zack-förmig gefalteten Band (12a) aufgebaut ist, wobei die einzelnen Blechlagen durch quer zur Längserstreckung des Bandes verlaufenden Faltungslinien (40) begrenzt sind.

15. Wabenkörper nach Anspruch 14, **dadurch gekennzeichnet, daß** das zick-zack-förmig gefaltete Band (12a) eine Längswellung aufweist und daß die Wellentäler und Wellenberge mit Einschnitten (43) versehen sind, wobei zwischen den Einschnitten (43) die benachbarten Blechlagen (13a,13b) miteinander verbindende Stege (42) angeordnet sind und daß die Faltungslinien (40) im Bereich der Einschnitte (43) angeordnet sind.

16. Wabenkörper nach Anspruch 14 oder 15, **dadurch gekennzeichnet, daß** die Einschnitte (170,171) auf Höhe der Faltungslinie schräg zu dieser verlaufen und daß durch die Einschnitte (170,171) im gefalteten Zustand des Bandes (12a) von der Stirnseite des Wabenkörpers vor- oder zurückspringende Bereichs (172,173) der Blechlagen (13a,13b) ausgebildet werden.

17. Wabenkörper nach einem der Ansprüche 14 bis 16, **dadurch gekennzeichnet, daß** an die Faltungslinie (40) zumindest einseitig ein stegförmiger, stirnseitig verlaufender Streifen (37) des den Wabenkörper (11) aufbauenden Bandes (12a) vorgesehen ist, der von den Einströmöffnungen des Wabenkörpers (11) stirnseitig vorsteht.

18. Wabenkörper nach einem der Ansprüche 14 bis 17, **dadurch gekennzeichnet, daß** ein sich über die stirnseitige Öffnung zumindest eines Kanals erstreckendes langgestrecktes Profilelement (34a,283) vorgesehen ist.

19. Wabenkörper nach einem der Ansprüche 1 bis 18, **dadurch gekennzeichnet, daß** der Wabenkörper zusätzlich zu den einlagigen Blechlagen vorgesehene Versteifungselemente (32,269) aufweist, die sich im wesentlichen parallel zu den Blechlagen erstrecken.

20. Wabenkörper nach einem der Ansprüche 1 bis 19, **dadurch gekennzeichnet, daß** zusätzlich zu den einlagigen Blechlagen Versteifungselemente (33,68) vorgesehen sind, die sich quer zu den Blechlagen erstrecken und die mehrere Blechlagen miteinander verbinden.

21. Wabenkörper nach Anspruche 19 oder 20, **dadurch gekennzeichnet, daß** die Versteifungselemente (32, 33, 68, 269) durch Katalysatorbeschichtungsmaterial an den Blechlagen festgelegt sind.

22. Wabenkörper nach einem der Ansprüche 1 bis 21, **dadurch gekennzeichnet, daß** der Wabenkörper mit einem Gehäuse versehen ist, daß das Gehäuse einen stromaufwärts des Wabenkörpers angeordneten Zuführstutzen und einen stromabwärts des Wabenkörpers angeordneten Ableitungsstutzen zur Zuführung und Ableitung eines fluiden Mediums aufweist, und daß einer oder beide der Stutzen einen Winkel zur Wabenkörperlängsrichtung aufweisen.

23. Verwendung eines Wabenkörpers nach einem der Ansprüche 1 bis 22 als Katalysatorträgerkörper.

## Claims

1. Honeycomb, particularly a catalytic converter substrate, comprising a large number of foil layers (13, 13a, 133, 263, 277) stacked above one the other, in the space between which channels (38) are arranged through which a fluid can flow, the honeycomb has flow-in and flow-out apertures at its face ends, whereby at least in the region of one of the face ends of the honeycomb (11) means for flow deflection (30, 37, 102, 172, 173, 183, 264a, 265a) are arranged deflecting the flow of the fluid medium flowing into the channels, **characterized in that** a plurality of means for flow deflection (30, 37, 102, 172, 173, 183, 264a, 265a) is provided being arranged directly at the face end of the honeycomb (11) and extending outwardly or inwardly into the honeycomb.

2. Honeycomb as per Claim 1, **characterized in that** the means for flow deflection (172, 173, 183, 264a, 265a) extend transverse to the longitudinal direction of the honeycomb and are provided with flow defection faces inclining with an angle of 45° or less to the longitudinal direction of the honeycomb.

3. Honeycomb as per Claim 1 or 2, **characterized in that** the extension of the means for flow deflection (30, 37, 102, 172, 173, 183, 264a, 265a) perpendicularly to the stacking plane of the foil layers (13, 13a, 133, 263, 277) or to the flowing direction of the fluid medium is up to five to ten times the foil layer thickness.

4. Honeycomb as per one of Claims 1 to 3, **characterized in that** the honeycomb (11) is provided with foil layers which are provided with protruding and recending areas (172, 173) at the face end.

5. Honeycomb as per Claim 4, **characterized in that** the foil layers at the height of the protruding and recending areas (172, 173) are provided with elevations and depressions (169) extending in the longitudinal direction of the honeycomb.

6. Honeycomb as per one of Claims 1 to 5, **characterized in that** the honeycomb (110) is provided with means for flow deflection being designed as foil layer sections protruding from the face end of the honeycomb and that a flow of the fluid medium into the space between the protruding layer sections in a direction transverse to the longitudinal direction of the honeycomb is enabled.

7. Honeycomb as per one of Claims 1 to 6, **characterized in that** the honeycomb is provided with corrugated foil layers (266) having tops and depressions (267), being provided apart from the face ends of the honeycomb with sections (264a, 265a) that are inclined in relation to the planes of the foil layers.

8. Honeycomb as per Claim 7, **characterized in that** the tops or depressions (267) of the corrugations of the foil layers are provided with slits separating adjacent foil layer sections that are arranged spaced apart from the face ends of the honeycomb and that the foil layer sections (264a, 265a) arranged at the side of the slits are inclined to the stacking plane of the foil layers (266).

9. Honeycomb as per one of Claims 1 to 8, **characterised in that** the means for deflection are designed as profiled elements (30, 283) extending parallel to the foil layers and transverse to the longitudinal direction of the honeycomb, the profiled elements extending into the cross section of the honeycomb the fluid medium is flowing in.

10. Honeycomb as per one of Claims 1 to 9, **characterized in that** the honeycomb is provided with corrugated foil layers having flattened areas (183) in the region of the tops and/or depressions of the corrugations at the face end of the honeycomb, the flattened areas running in an angle to the longitudinal axis of the honeycomb.

11. Honeycomb as per one of Claims 1 to 10, **characterized in that** the honeycomb is provided with corrugated foil layers having slitted tops or depressions of the corrugations at the face end of the honeycomb, the slits (184) end at the face end of the honeycomb and are extending substantially in the longitudinal direction of the honeycomb, the foil layer sections (185, 186) being adjacent to the slits in a lateral direction are folded in a direction towards an adjacent foil layer.

12. Honeycomb as per one of the Claims 1 to 11, **characterized in that** the means for flow defection are inserts (95, 100, 165) which axially protrude from the face end of the honeycomb and engage the ducts of the honeycomb.

13. Honeycomb as per one of the Claims 1 to 11, **characterized in that** the means for flow defection are separate insert members (201) axially protruding from at least one of the face ends of the honeycomb.

14. Honeycomb as per one of Claims 1 to 13, **characterized in that** the honeycomb is manufactured from a zig-zag-like folded strip (12a), whereby the distinct foil layers being terminated by folding lines (40) extending transverse to the longitudinal direction of the strip.

15. Honeycomb as per Claim 14, **characterized in that** the zig-zag-like folded strip (12a) is provided with corrugations exteding in the longitudinal direction of the strip and that the tops and depressions of the corrugations are provided with slits (43), webs (42) connecting adjacent foil layers (13a, 13b) are provided between the slits (43) and the folding lines (40) are arranged in the region of the slits (43).

16. Honeycomb as per Claim 14 or 15, **characterized in that** the slits (170, 171) being arranged at the folding lines of the zig-zag-like strip extend in a direction being inclined to the extension of the folding lines and that areas (172, 173) of the foil layers (13a, 13b) protruding or recending from a face end of the honeycomb are generated by the slits (170, 171) in the folded state of the strip (12a).

17. Honeycomb as per one of Claims 14 to 16, **characterized in that** the zig-zag-like folded strip (12a) of the honeycomb is provided with a strip (37) having a web-like structure arranged at least on one side of the folding lines (40) and extending on the face end of the honeycomb, the web-like strip protrudes from the flow-in apertures of the honeycomb.

18. Honeycomb as per one of the Claims 14 to 17, **characterized in that** an elongated profiled element (34a, 283) is provided extending over an aperture of a least on of the ducts being arranged on a face end of the honeycomb.

19. Honeycomb as per one of the Claims 1 to 18, **characterized in that** the honeycomb is provided with stiffening elements (32, 269) additional to the single layered foil layers, the stiffening elements extend substantially parallel to the foil layers.

20. Honeycomb as per one of the Claims 1 to 19, **characterized in that** the honeycomb is provided with stiffening elements (33, 68) additional to the single layered foil layers, the stiffening elements extend substantially transverse to the foil layers and connect several foil layers with each other.

21. Honeycomb as per Claim 19 or 20, **characterized in that** the stiffening elements (32, 33, 68, 269) are fastened at the foil layers by means of a catalytically active coating material.

22. Honeycomb as per one of the Claims 1 to 21, **characterized in that** the honeycomb is provided with a housing, the housing is provided with a flow-in connecting piece being arranged upstream of the honeycomb and with a flow-out connecting piece being arranged downstream of the honeycomb to supply and to conduct a fluid medium, and that one or both of the connecting pieces are inclined with an angle to the longitudinal direction of the honeycomb.

23. Use of a honeycomb as per one of the Claims 1 to 22 as a catalytic converter substrate.

## Revendications

1. Corps alvéolaire, en particulier, support de catalyseur, comportant une pluralité de couches de tôle disposées empilées les unes sur les autres (13, 13a, 133, 263, 277), entre lesquelles sont réalisés des canaux (38) pouvant être traversés par un fluide, et des orifices d'introduction ou d'évacuation sur la face, sachant qu'au moins dans la zone d'un côté face du corps alvéolaire (11), sont prévus des moyens servant à dévier l'écoulement (30, 37, 102, 172, 173, 183, 264a, 265a) du fluide arrivant dans les canaux, **caractérisé en ce qu'**est prévue une multitude de moyens servant à dévier l'écoulement (30, 37, 102, 172, 173, 183, 264a, 265a) disposés directement au niveau du côté face du corps alvéolaire (11) et s'étendant vers l'extérieur ou dans le corps alvéolaire.

2. Corps alvéolaire selon la revendication 1, **caractérisé en ce que** les moyens servant à dévier l'écoulement (172, 173, 183, 264a, 265a) sont transversaux au sens longitudinal du corps alvéolaire et **en ce qu'**ils présentent des faces de déviation de l'écoulement situées dans un angle de 45° ou moins par rapport au sens longitudinal du corps alvéolaire.

3. Corps alvéolaire selon l'une quelconque des revendications 1 à 2, **caractérisé en ce que** l'extension des moyens servant à dévier l'écoulement (30, 37, 102, 172, 173, 183, 264a, 265a) présente perpendiculairement au niveau d'empilage des couches de tôle (13, 13a, 133, 263, 277) ou au sens d'écoulement du fluide, une épaisseur de cinq à dix fois, au maximum, de l'épaisseur de la couche de tôle.

4. Corps alvéolaire selon l'une quelconque des revendications 1 à 3, **caractérisé en ce que** le corps alvéolaire (11) présente des couches de tôle avec, à chaque fois, côté face, des zones en saillie ou en retrait (172, 173).

5. Corps alvéolaire selon la revendication 4, **caractérisé en ce que**, sur la hauteur des zones en saillie et en retrait (172, 173), les couches de tôle sont pourvues d'élévations ou d'enfoncements (169) s'étendant dans le sens longitudinal du corps alvéolaire.

6. Corps alvéolaire selon l'une quelconque des revendications 1 à 5, **caractérisé en ce que** le corps alvéolaire (110) présente des moyens servant à dévier l'écoulement sous forme de sections de couches de tôle faisant saillie côté face du corps alvéolaire (110) et **en ce que** le fluide peut arriver latéralement, par rapport au sens longitudinal du corps alvéolaire, dans les sections de couches de tôle faisant saillie.

7. Corps alvéolaire selon l'une quelconque des revendications 1 à 6, **caractérisé en ce que** le corps alvéolaire présente des couches de tôle ondulée (266) avec des sommets et des creux (267), pourvus, à distance des côtés face, de sections (264a, 265a) déviées par rapport au niveau de couches de tôle.

8. Corps alvéolaire selon la revendication 7, **caractérisé en ce qu'**à distance des côtés face, les sommets ou les creux (267) des ondulations des couches de tôle sont pourvus de ces découpures servant à séparer, et **en ce que** les sections de couches de tôle (264a, 265a) disposées côté face par rapport aux découpures sont déviées par rapport au niveau d'empilage des couches de tôle (266).

9. Corps alvéolaire selon l'une quelconque des revendications 1 à 8, **caractérisé en ce que** les moyens servant à dévier l'écoulement sont réalisés en tant qu'éléments profilés (30, 283) s'étendant transversalement au sens longitudinal du corps alvéolaire, parallèlement aux couches de tôle et dans la section transversale d'afflux du corps alvéolaire.

10. Corps alvéolaire selon l'une quelconque des revendications 1 à 9, **caractérisé en ce que** le corps alvéolaire comporte des couches de tôle ondulée présentant, côté face, dans la zone des sommets et/ou des creux des ondulations, des sections (183) aplaties et inclinées par rapport à l'axe longitudinal du corps alvéolaire.

11. Corps alvéolaire selon l'une quelconque des revendications 1 à 10, **caractérisé en ce que** le corps alvéolaire comporte des couches de tôle présentant, dans la zone des sommets ou des creux des ondulations des couches de tôle, des fentes (184) se terminant côté face et situées essentiellement dans le sens longitudinal du corps alvéolaire et **en ce que** les zones, latéralement contiguës au niveau des fentes, des couches de tôle (185, 186) sont courbées en direction de la couche de tôle adjacente.

12. Corps alvéolaire selon l'une quelconque des revendications 1 à 11, **caractérisé en ce que** les moyens servant à dévier l'écoulement sont réalisés en tant que pièces rapportées (95, 100, 165) faisant saillie côté face du corps alvéolaire et en prise dans les canaux du corps alvéolaire.

13. Corps alvéolaire selon l'une quelconque des revendications 1 à 11, **caractérisé en ce que** les moyens servant à dévier l'écoulement sont réalisés en tant que pièces supplémentaires (201) séparées, faisant saillie côté face du corps alvéolaire.

14. Corps alvéolaire selon l'une quelconque des revendications 1 à 13, **caractérisé en ce que** le corps alvéolaire est constitué d'une bande (12a) pliée en forme de zigzag, sachant que chacune des couches de tôle est délimitée par des lignes de plissement (40) transversales à l'extension longitudinale de la bande.

15. Corps alvéolaire selon la revendication 14, **caractérisé en ce que** la bande (12a) pliée en forme de zigzag, présente une ondulation longitudinale et **en ce que** les creux de l'onde et les sommets de l'onde sont pourvus de découpures (43), sachant qu'entre les découpures (43), sont disposées des barrettes (42) reliant ensemble les couches de tôles adjacentes (13a, 13b), et **en ce que** les lignes de plissement (40) sont situées dans la zone des découpures (43).

16. Corps alvéolaire selon la revendication 14 ou 15, **caractérisé en ce que** les découpures (170, 171) sont, sur la hauteur de la ligne de plissement, obliques à celle-ci et **en ce que** les découpures (170, 171), forment, la bande (12a) à l'état plié, des zones (172, 173), en saillie ou en retrait du côté face du corps alvéolaire, des couches de tôle (13a, 13b).

17. Corps alvéolaire selon l'une quelconque des revendications 14 à 16, **caractérisé en ce qu'**il est prévu, au niveau de la ligne de plissement (40), au moins d'un côté, une bande (37) côté face et en forme de traverse, de la bande (12a) constituant le corps alvéolaire (11), en saille des orifices d'introduction du corps alvéolaire (11) côté face.

18. Corps alvéolaire selon l'une quelconque des revendications 14 à 17, **caractérisé en ce qu'**il est prévu un élément profilé (34a, 283) allongé, s'étendant au-dessus de l'orifice, côté face, d'au moins un canal.

19. Corps alvéolaire selon l'une quelconque des revendications 1 à 18, **caractérisé en ce que** le corps alvéolaire présente des éléments de renforcement (32, 269) prévus en plus des couches de tôle monocouches et s'étendant essentiellement parallèlement aux couches de tôle.

20. Corps alvéolaire selon l'une quelconque des revendications 1 à 19, **caractérisé en ce que** sont prévus, en plus des couches de tôle monocouches, des éléments de renforcement (33, 68) s'étendant transversalement aux couches de tôle et reliant ensemble plusieurs couches de tôle.

21. Corps alvéolaire selon la revendication 19 ou 20, **caractérisé en ce que** les éléments de renforcements (32, 33, 68, 269) sont fixés au niveau des couches de tôle à travers le matériau de revêtement du catalyseur.

22. Corps alvéolaire selon l'une quelconque des revendications 1 à 21, **caractérisé en ce que** le corps alvéolaire est équipé d'un caisson, **en ce que** le caisson présente une tubulure d'amenée disposée en aval et une tubulure d'évacuation disposée en amont pour l'amenée et l'évacuation d'un fluide et **en ce qu'**une ou les deux tubulures présente(nt) un angle par rapport au sens longitudinal du corps alvéolaire.

23. Utilisation d'un corps alvéolaire selon l'une quelconque des revendications 1 à 22 en tant que corps de support de catalyseur.
